# EUROPÄISCHE PATENTSCHRIFT

(11) **EP 3 863 231 B1**
(45) Veröffentlichungstag und Bekanntmachung des Hinweises auf die Patenterteilung: **15.11.2023**
(21) Anmeldenummer: 20155402.9
(22) Anmeldetag: 04.02.2020
(51) Int. Cl.: H04L 12/40

(54) **AUTOMATISIERUNGSNETZWERK MIT PAKETBASIERTER KOMMUNIKATION ZWISCHEN HOST UND CLIENT SOWIE VERFAHREN ZUM BETRIEB EINES AUTOMATISIERUNGSNETZWERKS**
AUTOMATION NETWORK WITH PACKET-BASED COMMUNICATION BETWEEN HOST AND CLIENT AND METHOD FOR OPERATING AN AUTOMATION NETWORK
RÉSEAU D'AUTOMATISATION À COMMUNICATION BASÉE SUR PAQUETS ENTRE L'HÔTE ET LE CLIENT AINSI QUE PROCÉDÉ DE FONCTIONNEMENT D'UN RÉSEAU D'AUTOMATISATION

(43) Veröffentlichungstag der Anmeldung: 11.08.2021
(73) Patentinhaber: Siemens Aktiengesellschaft, 80333 München (DE)
(72) Erfinder: Pelzer, Alexander, 90763 Fürth (DE); Goetz, Jan, 91054 Buckenhof (DE)
(74) Vertreter: Siemens Patent Attorneys

(56) Entgegenhaltungen:
- DE-A1- 10 332 360
- DE-A1-102007 046 326
- DE-A1-102014 201 948
- DE-T5-112010 004 006

## Beschreibung

Die vorliegende Erfindung betrifft ein Automatisierungsnetzwerk, in dem paketbasierte Kommunikation zwischen Host und Clients erfolgt, einen Host und einen Client in diesem Automatisierungsnetzwerk sowie ein Verfahren zum Betrieb eines solchen Automatisierungsnetzwerks.

In Automatisierungsnetzwerken werden Host-Client-Systeme eingesetzt. Hierbei übernimmt der Host oft komplexe Steueraufgaben unter Einbeziehung der Daten vieler Clients. Die Eingangsdaten dieser Clients werden den Clients von dem System zur Verfügung gestellt, das durch den jeweiligen Client gesteuert wird. Die von den Clients gesteuerten Systeme können z.B. Drohnen, einzelne Flurförderzeuge in einem Lager sein oder Komponenten einer komplexen Produktionsmaschine, wie Motoren für Antriebe, Pumpen, Schalter, Ventile etc. Bei den genannten Eingangsdaten kann es sich um Daten handeln, die Eigenschaften des angeschlossenen Systems beschreiben, wie Schaltzustände (z.B. von Endschaltern), Motordrehzahlen, Geschwindigkeiten, Temperaturen, Drücke, Füllstände. Diese Eingangsdaten werden im Host verarbeitet. Im nächsten Schritt stellt der Host den einzelnen Clients Daten zur Verfügung, die der Client als Ausgangsdaten an das angeschlossene System weitergibt, z.B. als Schaltausgänge zur Ansteuerung von Aktoren, numerische Sollwerte zur Steuerung von Motoren usw.

Eine solche Host-Client-Architektur wird aus zwei Gründen gewählt. Einerseits soll die zur Steuerung komplexer Systeme erforderliche Kapazität (Anzahl von Rechenoperationen, Speicher etc.) in einem Rechenzentrum oder der Cloud z.B. auf einer Vielzahl von Servern zentral bereitgestellt werden. So kann das Wechselspiel der von den einzelnen Clients gesteuerten (Teil-)Systeme angemessen berücksichtigt werden. Andererseits sollen die Clients in den Systemen vor Ort technisch möglichst einfach, also mit möglichst wenig elektronischen Bauelementen und mit geringer Kapazität ausgerüstet werden. Deshalb werden bevorzugt Steuerungs- und Regelungsaufgaben statt von den Clients vor Ort von einer zentralen Instanz ausgeführt.

Die Kommunikation in einem solchen Host-Client-System kann drahtgebunden erfolgen, über z.B. Profibus, Profinet oder Ethernet. Zur Steuerung und Regelung mobiler Systeme ist jedoch drahtlose Kommunikation über Funk besser geeignet. Dafür werden paketbasierte Standards digitaler Funkübertragung wie die drahtlosen Varianten der oben genannten Verbindungen sowie 3G, 4G, 5G etc. verwendet.

Für die Aufteilung der Aufgaben zwischen Client und Host zur Steuerung und Regelung der mit dem Automatisierungsnetzwerk verbundenen Systeme liegt eine wesentliche Begrenzung in der Latenzzeit der drahtlosen Kommunikation. Mit den bisher verbreiteten Standards müssen im Zeitbereich einzelner Millisekunden zu erledigende Aufgaben im Client vor Ort bearbeitet werden, da die Übertragung an den Host und zurück zu viel Zeit beansprucht, um eine Bearbeitung auf dem Host zu ermöglichen. So können Sensordaten vom Client an den Host übertragen werden, wie z.B. der Ort und die Geschwindigkeit eines Flurförderzeugs. Diese Daten kann der Host z.B. zur Verfolgung und Archivierung der Bewegung eines Flurförderzeugs verwenden.

Mit der fortschreitenden Verringerung der Latenzzeiten in der drahtlosen Kommunikation, die z.B. beim Standard 5G URLLC weniger als 1 ms beträgt, gibt es mehr Möglichkeiten, Aufgaben auf dem Host zu erledigen. So können z.B. Neuberechnungen des Weges eines Transportmittels oder Regelungsvorgänge auf dem Host vorgenommen werden, wenn die drahtlose digitale Kommunikation mit diesem Standard erfolgt. Dies ist insbesondere deshalb von Vorteil, da auf einem stationären Host entsprechende Kapazitäten (Anzahl von Rechenoperationen, Speicher etc.) einfacher vorgehalten werden können als auf dem Client eines leichten mobilen Systems. Entsprechend können auf dem Host komplexere Regelungsalgorithmen durchgeführt werden als auf einem Client. Dadurch werden die Möglichkeiten zur Steuerung und Regelung erweitert und verbessert.

Dabei entsteht jedoch das Problem, dass bei der Paketkommunikation nicht immer alle Pakete sofort übertragen werden können. Es kommt zu Verzögerungen bei der Übertragung vom Host zum Client oder vom Client zum Host. Während normalerweise alle Pakete übertragen werden, wenn auch mit Verzögerung, führen diese Verzögerungen dazu, dass z.B. einem Transportmittel nicht genug Daten für die Fortsetzung seines Transportwegs zur Verfügung stehen oder die Güte einer Regelung beeinträchtigt wird.

Paketgebundene Kommunikation ist aus vielen Bereichen bekannt. Aus der DE 11 2010 004 006 ist beispielsweise ein Mehrprozessorkern mit einem chipintegrierten Netzwerk bekannt, welches mittels Zuverlässigkeitsanforderungen an die Pakete sicherstellt, dass eine zuverlässige Kommunikation ermöglicht wird.

Vor diesem Hintergrund besteht eine Aufgabe der vorliegenden Erfindung darin, den Betrieb von Automatisierungsnetzwerken mit paketbasierter Kommunikation zwischen Host und Client zu verbessern.

Die Aufgabe wird gelöst durch ein Verfahren umfassend die Merkmale des unabhängigen Patentanspruchs 1.

Weiterhin wird die Aufgabe gelöst durch ein Automatisierungsnetzwerk mit den Merkmalen des Patentanspruchs 14 und durch eine Client-Einrichtung umfassend die Merkmale des Patenanspruchs 13.

Demgemäß wird ein Verfahren vorgeschlagen zum Betrieb eines Automatisierungsnetzwerks, welches eine Host-Einrichtung, mindestens eine Client-Einrichtung und eine paketbasierte Kommunikationsverbindung zwischen der Host-Einrichtung und der Client-Einrichtung aufweist, mit den Schritten Erzeugen und Versenden von Eingangswert-Paketen durch die Client-Einrichtung über die Kommunikationsverbindung an die Host-Einrichtung, Erzeugen und Versenden von Ausgangswert-Paketen durch die Host-Einrichtung über die Kommunikationsverbindung an die Client-Einrichtung, und, falls die Client-Einrichtung über die Kommunikationsverbindung mindestens ein Ausgangswert-Paket nicht innerhalb eines vorgegebenen Zeitraums empfängt, Erzeugen eines Ersatz-Ausgangswert-Pakets durch die Client-Einrichtung.

Wenn im Verlauf der Übertragung eines Eingangswert-Pakets vom Client zum Host Verzögerungen auftreten, kommt es dazu, dass der Host nicht mehr in der Lage ist, die schnell zu erledigenden Steuerungs- und/oder Regelungsaufgaben abzuarbeiten und dem Client entsprechende Ausgangswert-Pakete zu übermitteln. Somit trifft das Eingangswert-Paket nicht in der vorhergesehenen Zahl an Prozesszyklen beim Host ein. In der Richtung vom Host zum Client können ebenfalls Verzögerungen bei der Übermittlung von Ausgangswert-Paketen eintreten. So kann es dazu kommen, dass der Client nach einer vorbestimmten Anzahl von Prozesszyklen nach dem Versand eines Eingangswert-Pakets den Empfang des erwarteten entsprechenden Ausgangswert-Pakets nicht registriert. Diese vorbestimmte Anzahl von Prozesszyklen, also eine vorbestimmte Zeit, gilt als nicht rechtzeitiges Empfangen eines Pakets, unabhängig davon, ob es sich um die Richtung vom Client zum Host oder um die Richtung vom Host zum Client handelt. Ein solches nicht rechtzeitiges Empfangen eines Pakets führt also dazu, dass der Client dem an das Automatisierungsnetzwerk angeschlossenen System nicht die erforderlichen Ausgangsdaten zur Verfügung stellen kann. Um die oben geschilderten negativen Konsequenzen zu vermeiden, übernimmt in diesem Fall des nicht rechtzeitigen Empfangs eines Pakets der Client die notwendige Erzeugung eines Ausgangswert-Pakets, eines sogenannten Ersatz-Ausgangswert-Pakets selbst. Wenn der Host ein erwartetes Eingangswert-Paket nicht nach der vorgegebenen Anzahl von Prozesszyklen erhält, kann er ein Signal an den Client senden, die Erzeugung eines Ersatz-Ausgangswert-Pakets selbst vorzunehmen.

Gemäß einer zweiten Ausführungsform wird das Verfahren dadurch erweitert, dass die Erzeugung der Ersatz-Ausgangswert-Pakete durch die Client-Einrichtung in Abhängigkeit von mindestens einem durch die Host-Einrichtung vorbestimmten Basis-Arbeitspunkt erfolgt.

Steuerungs- und Regelungsprozesse erfolgen oft im Bereich von Arbeitspunkten, an denen ein bestimmtes Verhalten der Steuerung oder Regelung vorhersehbar ist. Arbeitspunkte sind hierbei durch die Eigenschaften des vom Client gesteuerten Systems vorgegebene Zustände, die auch von Umgebungsparametern beeinflusst werden. Bei einfachen elektrischen Antrieben wird der Arbeitspunkt z.B. durch Drehzahl des angetriebenen Teils und das Drehmoment des Elektromotors vorgegeben. Der Arbeitspunkt eines Flurförderzeugs wird durch interne Parameter wie Geschwindigkeit und Lenkeinschlag und durch externe Parameter wie die Masse der geförderten Last bestimmt. Bei Drohnen sind z.B. Geschwindigkeit, Ort, Flughöhe, Windgeschwindigkeit und Temperatur Parameter, die den Arbeitspunkt bestimmen. Bei Produktionsmaschinen wird der Arbeitspunkt über die Stellung von Schaltern, Ventilen, Fördermengen und Antriebsgeschwindigkeiten bestimmt. Der Arbeitspunkt kann auch durch komplexere Parameter, etwa den Ableitungen von einfachen Parametern, wie sie oben beispielhaft genannt wurden, gebildet werden.

Genauer gesagt erfolgt die Ermittlung der Ersatz-Ausgangswert-Pakete in Abhängigkeit von dem tatsächlichen aktuellen Arbeitspunkt, also dem Zustand, in dem sich das System tatsächlich gerade befindet, relativ zu einem als Basis-Arbeitspunkt bezeichneten Arbeitspunkt. Dieser Basis-Arbeitspunkt wird vom Host vorab ermittelt. Selbstverständlich können auch mehrere Basis-Arbeitspunkte ermittelt werden. Solche Basis-Arbeitspunkte können bei Flurförderzeugen und Drohnen Fahrten bzw. Flüge ohne Last sein sowie Fahrten bzw. Flüge mit niedriger, mittlerer oder hoher Last.

Im normalen Verlauf der Kommunikation von Eingangswert-Paketen und Ausgangswert-Paketen kann der Host einen solchen Basis-Arbeitspunkt mit vorhersehbarem Verhalten ermitteln. Daraufhin kann der Host unabhängig von der normalen Bearbeitung der aktuellen Steuerungs- und/oder Regelungsaufgabe weitere Daten an den Client übertragen. Diese Daten beinhalten zum Beispiel das Verhalten für die Steuerung oder Regelung im Bereich um diesen Basis-Arbeitspunkt. Dieses Verhalten kann auf einem weniger komplexen Algorithmus basieren als der auf dem Host ablaufende Algorithmus. Dann wird zwar nicht dieselbe Regelungsgüte erreicht, wie sie mit der Regelung auf dem Host erzielbar ist. Dennoch kann ein Ausfall oder Stillstand der Regelung bei verzögertem Empfang von Paketen vermieden werden. Basierend auf den Regeln für das Verhalten im Bereich um diesen Basis-Arbeitspunkt kann der Client dann die Ausgangswert-Pakete selbst erzeugen, also Ersatz-Ausgangswert-Pakete erstellen. Diese Regelung durch den Client kann auch ständig parallel zur Erzeugung der Ausgangswert-Pakete auf dem Host erfolgen.

Gemäß einer dritten Ausführungsform wird eines der vorstehenden Verfahren dadurch erweitert, dass das Erzeugen der Ersatz-Ausgangswert-Pakete durch die Client-Einrichtung mit Hilfe eines der Client-Einrichtung zugeordneten lokalen Verarbeitungsmoduls erfolgt.

Unter einem Modul wird hier ein Element verstanden, das in Hardware, Firmware oder Software realisiert sein kann. Bei der Realisierung als Software kann es sich hierbei um einen Programmbaustein, also um ausführbaren Code handeln.

Der in der zweiten Ausführungsform erwähnte weniger komplexe Algorithmus, mit dem der Client die Ersatz-Ausgangswert-Pakete erzeugt, kann in einem eigenen Modul auf dem Client realisiert werden. Ein solches lokales Verarbeitungsmodul auf dem Client kann als Softwareprogramm, als Firmware oder als eigene Hardware bereitgestellt werden. Auch ein anderer, vom Arbeitspunkt unabhängiger Algorithmus kann verwendet werden.

Gemäß einer vierten Ausführungsform wird das Verfahren nach der dritten Ausführungsform durch Übermitteln von Parametern für das lokale Verarbeitungsmodul durch die Host-Einrichtung an die Client-Einrichtung erweitert.

Solche Parameter für das lokale Verarbeitungsmodul können beispielsweise geeignete Parameter eines festen Algorithmus sein, den das lokale Verarbeitungsmodul abarbeitet. Der Algorithmus im lokalen Verarbeitungsmodul kann zum Beispiel auf einen Gleichungssystem niedriger Ordnung basieren, das einen quasi-stationären Zustand am Basis-Arbeitspunkt hinreichend genau wiedergibt. In einem komplexeren Fall kann das lokale Verarbeitungsmodul einen Zustandsautomaten enthalten. Für den Betrieb dieses Zustandsautomaten sind Parametersätze nötig. Der Host hat diese Parametersätze zuvor abhängig vom Zustand des an den Client angeschlossenen Systems, vom internen Zustand des Hosts und/oder abhängig von den Zuständen anderer Clients ermittelt.

Gemäß einer fünften Ausführungsform wird das Verfahren nach der dritten oder vierten Ausführungsform durch Übermitteln des lokalen Verarbeitungsmoduls durch die Host-Einrichtung an die Client-Einrichtung erweitert.

Weiter besteht die Möglichkeit, dass der Host das lokale Verarbeitungsmodul komplett an den Client überträgt. Das lokale Verarbeitungsmodul erstellt der Host in Abhängigkeit vom aktuellen Zustand der Regelung oder Steuerung. Dies kann vorteilhaft in Form flexibler, auf Apps basierender Runtimes auf dem Client realisiert werden.

Gemäß einer sechsten Ausführungsform wird das Verfahren nach der zweiten Ausführungsform durch Ermitteln des mindestens einen vorbestimmten Basis-Arbeitspunkts durch die Host-Einrichtung zu vorbestimmten Zeitpunkten erweitert.

Bei einem Verfahren nach der zweiten Ausführungsform ist es wichtig, Änderungen im Arbeitspunkt zu berücksichtigen. Damit solche Änderungen erfasst werden können, wiederholt der Host die Ermittlung von in der nächsten Zeit voraussichtlich gültig werdenden Basis-Arbeitspunkten zu bestimmten Zeitpunkten, zum Beispiel periodisch. Die Zeitpunkte der Ermittlung oder Zeitabstände zwischen aufeinanderfolgenden Ermittlungen von Arbeitspunkten sind in Abhängigkeit vom zu überwachenden System zu bestimmen. Eine Ermittlung der Basis-Arbeitspunkte kann ebenso in Abhängigkeit von Eingangswert-Paketen des jeweiligen Clients und/oder anderer Clients bzw. in Abhängigkeit vom Zustand des gesamten Automatisierungsnetzwerks erfolgen. Wie schon in Zusammenhang mit der zweiten Ausführungsform beschrieben, können selbstverständlich mehrere in Frage kommende Basis-Arbeitspunkte ermittelt werden.

Gemäß einer siebten Ausführungsform wird das Verfahren nach einer der ersten bis sechsten Ausführungsformen durch den folgenden Schritt erweitert: beschleunigtes Erzeugen der Ausgangswert-Pakete durch die Host-Einrichtung solange, bis die Host-Einrichtung ein aktuelles Eingangswert-Paket rechtzeitig verarbeitet hat, in dem Fall, dass auf der Kommunikationsverbindung in Richtung von der Client-Einrichtung zur Host-Einrichtung mindestens ein Eingangswert-Paket nicht innerhalb eines vorgegebenen Zeitraums empfangen wird; und fortgesetztes Erzeugen der Ersatz-Ausgangswert-Pakete durch die Client-Einrichtung solange, bis ein aktuelles Eingangswert-Paket auf der Host-Einrichtung empfangen wurde und die Host-Einrichtung ab diesem Zeitpunkt die Ausgangswert-Pakete erzeugt.

Wenn bei der Kommunikation vom Client zum Host verzögerte Eingangswert-Pakete schließlich auf dem Host eintreffen, führt die entsprechende Routine auf dem Host eine beschleunigte Verarbeitung der jeweiligen Regelungs- oder Steuerungsprozesse durch. Dies bedeutet, dass die entsprechende Regelung oder Steuerung schneller erfolgt als im Normalbetrieb. So kann der während der Wartezeit unterbliebene Verlauf der Regelung oder Steuerung wieder aufgeholt werden, bis der interne Zustand der Steuerung oder Regelung für den aktuellen Taktzyklus hergestellt wurde. Ab diesem Zeitpunkt kann die Steuerung oder Regelung wieder im Normalbetrieb arbeiten. Somit kann die Regelung oder Steuerung wieder vom Host übernommen werden, und die Regelung oder Steuerung auf dem Client kann die Ausgabe der Ersatz-Ausgangswert-Pakete an das angeschlossene System einstellen und stattdessen die vom Host empfangenen Ausgangswert-Pakete ausgeben.

Gemäß einer achten Ausführungsform wird das Verfahren nach einer der ersten bis siebten Ausführungsformen durch folgende Schritte erweitert: Erzeugen einer Stellgröße für eine Regelstrecke, die von der Client-Einrichtung eine Stellgröße empfängt, aus den Ausgangswert-Paketen durch die Client-Einrichtung und Erstellen von Eingangswert-Paketen aus einer von einem Messglied empfangenen Messgröße durch die Client-Einrichtung.

Gemäß einer neunten Ausführungsform wird das Verfahren nach der achten Ausführungsform durch folgenden Schritt erweitert: Erzeugen der Ausgangswert-Pakete zur Ermittlung der Stellgrö-βe durch die Host-Einrichtung unter Verarbeitung der von der Client-Einrichtung aus der Messgröße erstellten Eingangswert-Pakete.

Gemäß einer zehnten Ausführungsform wird das Verfahren nach der fünften Ausführungsform durch folgenden Schritt erweitert: Übermitteln des lokalen Verarbeitungsmoduls durch die Host-Einrichtung an die Client-Einrichtung über eine alternative Kommunikationsverbindung.

Die Übermittlung des lokalen Verarbeitungsmoduls muss nicht mit derselben niedrigen Latenz erfolgen wie die Übermittlung der Eingangswert-Pakete oder der Ausgangswert-Pakete. Deshalb kann hier über die Luftschnittstelle eine Kommunikationsverbindung nach einem Standard mit höherer Latenzzeit benutzt werden. Wenn der Client nicht in ein mobiles System integriert ist oder das den Client enthaltende mobile System zeitweise über eine Steckverbindung mit dem Automatisierungsnetzwerk verbunden ist, kann auch drahtgebundene Kommunikation zur Übertragung des lokalen Verarbeitungsmoduls benutzt werden.

Gemäß einer elften Ausführungsform wird das Verfahren nach der fünften Ausführungsform durch folgenden Schritt erweitert: Erstellen des lokalen Verarbeitungsmoduls durch die Host-Einrichtung in Abhängigkeit von einem durch die Host-Einrichtung vorbestimmten Basis-Arbeitspunkt.

Je nach vorliegendem Arbeitspunkt kann es erforderlich sein, das lokale Verarbeitungsmodul an die jeweils vorliegenden Bedingungen anzupassen. In einem quasi-stationären Zustand kann ein lineares Gleichungssystem im Algorithmus des lokalen Verarbeitungsmoduls genügen. Bei komplexeren Zuständen kann jedoch ein anderer Algorithmus erforderlich sein. Deshalb ist es vorteilhaft, bei der Erstellung des lokalen Verarbeitungsmoduls auf dem Host den jeweiligen Arbeitspunkt zu berücksichtigen.

Gemäß einer zwölften Ausführungsform wird das Verfahren nach einer der ersten bis elften Ausführungsformen durch folgenden Schritt erweitert: Erzeugen der Ersatz-Ausgangswert-Pakete durch die Client-Einrichtung bis zu einer zeitlichen oder örtlichen Begrenzung in dem Fall, dass auf der Kommunikationsverbindung mindestens ein Paket nicht innerhalb eines vorgegebenen Zeitraums empfangen wird.

Wenn Datenpakete nur verzögert übermittelt werden und der Client die Erstellung der Ausgangswert-Pakete durchführt, ist es sinnvoll, dass der Client die Steuerung oder Regelung nur innerhalb gewisser vorgegebener zeitlicher oder örtlicher Grenzen ausführt. So kann sichergestellt werden, dass ein den Client enthaltendes mobiles System innerhalb eines vorgegebenen örtlichen Bereiches, z.B. innerhalb der Reichweite der Funkverbindung verbleibt. Durch eine zeitliche Begrenzung der Erstellung der Ersatz-Ausgangswert-Pakete durch den Client lässt sich erreichen, dass die Abweichung vom vorbestimmten Basis-Arbeitspunkt nicht zu groß wird. Ebenso kann eine zeitliche Beschränkung der Zeit, über die der Client die Ersatz-Ausgangswert-Pakete erstellt, Betriebsstörungen verhindern. Solche Betriebsstörungen entstehen z.B. dadurch, dass der Client zum Betrieb des angeschlossenen Systems über Parameter verfügen müsste, die nur dem Host bekannt sind. Wenn der Host Ausgangswert-Pakete erstellt, berücksichtigt er diese Parameter bei der Erstellung der Ausgangswert-Pakete. Wenn dagegen der Client Ersatz-Ausgangswert-Pakete erstellt, können diese Parameter nicht berücksichtigt werden. Im letzteren Fall können dann Störungen entstehen. Durch eine zeitliche Begrenzung der Erzeugung der Ersatz-Ausgangswert-Pakete können diese Störungen vermieden werden.

Gemäß einer weiteren Ausführungsform wird ein Automatisierungsnetzwerk vorgeschlagen, das zur Durchführung eines Verfahrens nach einer der ersten bis zwölften Ausführungsformen eingerichtet ist und das eine Host-Einrichtung, mindestens eine Client-Einrichtung und eine paketbasierte Kommunikationsverbindung zwischen der Host-Einrichtung und der Client-Einrichtung umfasst, wobei die Client-Einrichtung zum Erzeugen und Versenden von Eingangswert-Paketen über die Kommunikationsverbindung an die Host-Einrichtung eingerichtet ist und die Host-Einrichtung zum Erzeugen und Versenden von Ausgangswert-Paketen über die Kommunikationsverbindung an die Client-Einrichtung eingerichtet ist, und die Client-Einrichtung weiter eingerichtet ist zum Erzeugen eines Ersatz-Ausgangswert-Pakets, falls die Client-Einrichtung über die Kommunikationsverbindung mindestens ein Ausgangswert-Paket nicht innerhalb eines vorgegebenen Zeitraums empfängt.

Gemäß einer weiteren Ausführungsform wird eine Client-Einrichtung vorgeschlagen, die zur Durchführung eines Verfahrens nach einer der ersten bis zwölften Ausführungsformen eingerichtet ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt schematisch ein Automatisierungsnetzwerk;
Fig. 2 zeigt schematisch einen Host und einen Client aus dem Automatisierungsgrad sowie die Kommunikationsverbindungen zwischen Host und Client;
Fig. 3 zeigt schematisch einen Host;
Fig. 4 zeigt schematisch einen Client;
Fig. 5 zeigt ein schematisches Zeitdiagramm mit Kommunikation zwischen Host, Client und angeschlossenem System;
Fig. 6 zeigt ein schematisches Zeitdiagramm mit Kommunikation zwischen Host, Client und angeschlossenem System, wenn ein Ausgangswert-Paket nicht innerhalb eines vorgegebenen Zeitraums vom Client empfangen wird;
Fig. 7 zeigt ein schematisches Zeitdiagramm mit Kommunikation zwischen Host, Client und angeschlossenem System, wenn ein Eingangswert-Paket nicht innerhalb eines vorgegebenen Zeitraums vom Host empfangen wird;
Fig. 8 zeigt ein Flussdiagramm mit einem Verfahren zum Betrieb des Automatisierungsnetzwerks;
Fig. 9 zeigt ein Flussdiagramm mit einem Ablauf des Verfahrens auf dem Host;
Fig. 10 zeigt ein Flussdiagramm mit einem Ablauf des Verfahrens auf einen Client.

In den Figuren sind gleiche oder funktionsgleiche Elemente mit denselben Bezugszeichen versehen worden, sofern nichts anderes angegeben ist.

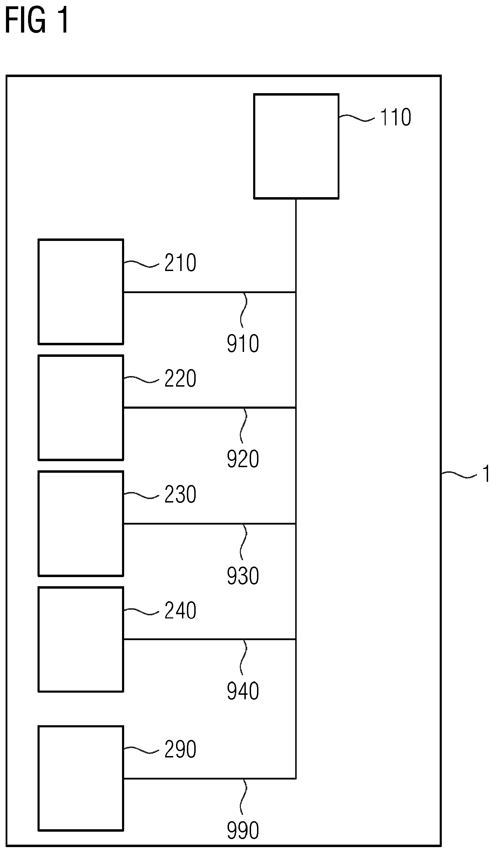

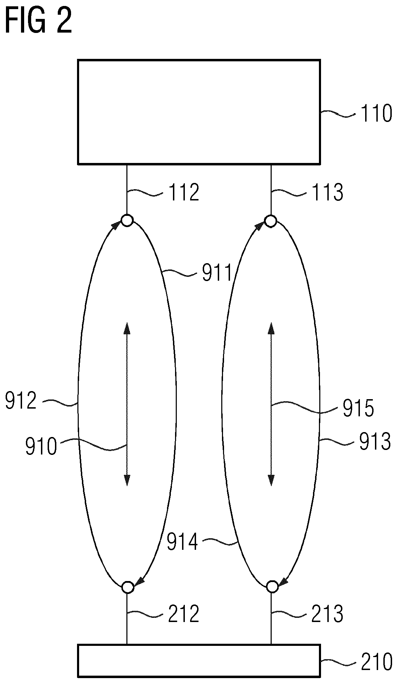

In Fig. 1 ist schematisch ein Automatisierungsnetzwerk 1 dargestellt mit einem Host 110, der über Kommunikationsverbindungen 910, 920, 930, 940, ..., 990 mit Clients 210, 220, 230, 240, ..., 290 verbunden ist. Beispielhaft ist in Fig. 2 schematisch dargestellt, dass der Host 110 über eine Antenne 112 vom Client 210 von dessen Antenne 212 ausgesandte Informationen über die Kommunikationsverbindung 912 empfängt und selbst über die Kommunikationsverbindung 911 Informationen an den Client überträgt. Die Kommunikationsverbindungen 911 und 912 sind Teil der Kommunikationsverbindung 910 in Fig. 1. Parallel zu dieser Kommunikationsverbindung existiert eine Kommunikationsverbindung 915 zwischen Host und Client, die zerfällt in die Kommunikationsverbindung 913, über die der Host Informationen an den Client überträgt und die Kommunikationsverbindung 914, über die der Host vom Client Informationen empfängt. Diese Kommunikationsverbindung 915 ist vorzugsweise ebenfalls per Funk ausgeführt. Für diese Kommunikationsverbindung 915 ist am Host die Antenne 113 und am Client die Antenne 213 vorhanden.

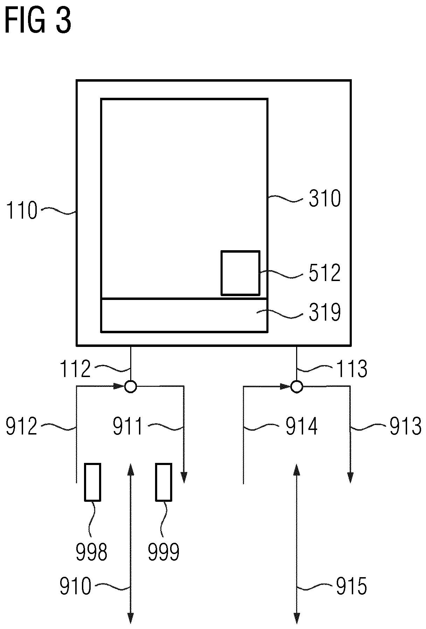

Fig. 3 zeigt im Detail den Aufbau des Hosts 110, der über die Antenne 112 in Downlink-Richtung über die Kommunikationsverbindung 911 Ausgangswert-Pakete 999 an den Client überträgt und von ihm in Uplink-Richtung über die Kommunikationsverbindung 912 Eingangswert-Pakete 998 empfängt. Die Kommunikationsverbindungen 911 und 912 sind Teile der Kommunikationsverbindung 910 zwischen Host 110 und Client 210. Parallel können über eine weitere Kommunikationsverbindung 915 Informationen zwischen Host 110 und Client 210 ausgetauscht werden. Auf dem Host 110 befindet sich das Automatisierungsmodul 310, das den Prozess auf dem Client 210 steuert und regelt. Dabei werden auch die Informationen, also die Eingangswert-Pakete der anderen Clients berücksichtigt. Weitere, in den Fig. nicht gezeigte Module zur Steuerung und Regelung der Prozesse der anderen Clients 220 bis 290 sind ebenfalls auf dem Host vorhanden. Über das Kommunikationsmodul 319 erfolgt die Kommunikation über die Verbindungen 910 (bestehend aus den Kommunikationsverbindungen 911 und 912) und 915 (bestehend aus den Kommunikationsverbindungen 913 und 914) mit dem Client 210. Für die übrigen Clients sind weitere Kommunikationsmodule vorgesehen, die hier nicht gezeigt sind.

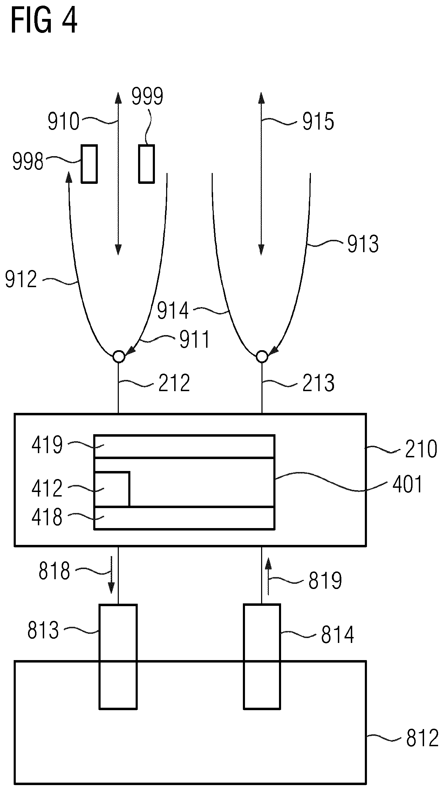

Fig. 4 ist eine detaillierte Darstellung des Clients 210, der mit Hilfe der Antenne 212 über die Kommunikationsverbindungen 911 und 912 die Eingangswert-Pakete 998 und die Ausgangswert-Pakete 999 mit dem Host austauscht. Das Kommunikationsmodul 419 ist im Modul 401 für die Steuerung und Regelung des Clients und des an den Client angeschlossenen Systems enthalten und kontrolliert die Kommunikation mit dem Host. Über eine Verbindung 818 gibt der Client 210 seine Ausgangssignale mit Hilfe des Kommunikationsmoduls 418 an Eingänge 813 des vom Automatisierungsnetzwerk 1 über den Client 210 gesteuerten Systems 812 aus. Dieses System 812 gibt wiederum Signale mit Hilfe der Kommunikationsverbindung 819 über Ausgänge 814 an Eingänge des Clients 210. Zusätzlich zu den Kommunikationsverbindungen 911 und 912, die auf Funk basieren, verfügt der Client 210 noch über die Kommunikationsverbindung 915 zum Host. Bei Bedarf erzeugt das lokale Verarbeitungsmodul 412 Ausgangswert-Pakete 999 zur Ausgabe an die Eingänge 813 des angeschlossenen Systems 812.

Das lokale Verarbeitungsmodul 412 kann als App ausgeführt sein. Andere mögliche Ausführungsformen umfassen eine Realisierung des Moduls als Hardware in Form z.B. eines ASIC oder als FPGA. Selbstverständlich kann das Modul auch als Software, Firmware oder Hardware in einem Mehrzweck-Prozessor oder einer dedizierten Hardware bereitgestellt werden. Die Übermittlung dieses lokalen Verarbeitungsmoduls 412 kann über die alternative Kommunikationsverbindung 915 erfolgen. Diese Kommunikationsverbindung kann als breitbandige Funkverbindung mit geringeren Latenzanforderungen ausgeführt sein, z.B. nach dem Standard 5G eMBB.

Generell ist zu sagen, dass die Ausgangswert-Pakete auf dem Client nicht zwingend direkt in Ausgänge des Automatisierungsnetzwerks umgesetzt werden müssen. Es kann sich bei Ausgangswert-Paketen auch um Parameter für Regelungsvorgänge handeln. Ein Beispiel ist die vom Host ausgehende Anweisung zur Richtungsänderung, die über den Client an ein Transportmittel als angeschlossenes System auszugeben ist. Je nach dem aktuellen Zustand, in dem sich das Transportmittel befindet, kann dann der Client diese Anweisung unterschiedlich umsetzen, z.B. durch Ausgabe eines Befehls an Steuerelemente im Transportmittel oder durch Änderung der Geschwindigkeiten einzelner Antriebe des Transportmittels, ohne dass Details der Umsetzung auf dem Client vom Host explizit in den Ausgangswert-Paketen beschrieben sein müssen.

Entsprechendes gilt auch für die vom Client zum Host übertragenen Eingangswert-Pakete. Es ist zwar auch möglich, dass der Client Daten, die er vom angeschlossenen System empfangen hat, unverändert an den Host überträgt. Jedoch kann der Client auch Daten, die er z.B. von einem Transportmittel als angeschlossenen System empfangen hat, vor der Weitergabe an den Host auswerten und bearbeiten. So kann der Client z.B. Drehzahlen und Daten zur räumlichen Orientierung des Transportmittels in Eingangswert-Pakete umsetzen, die nur die aktuelle Geschwindigkeit und Bewegungsrichtung des Transportmittels enthalten.

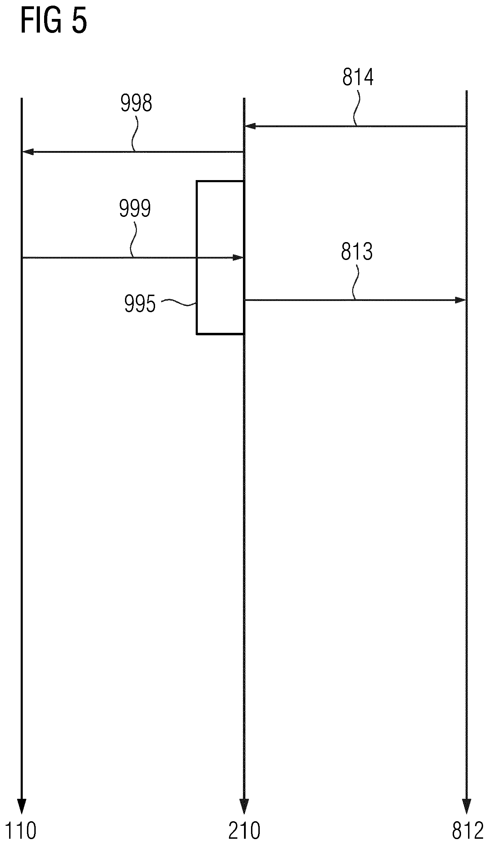

Fig. 5 zeigt den normalen zeitlichen Ablauf der Kommunikation zwischen System 812, Client 210 und Host 110, wie er nach dem Stand der Technik erfolgt. Hierfür sind die diesen Systemen entsprechenden Zeitpfeile mit den Bezugszeichen der jeweiligen Komponente gekennzeichnet. Die Eingangswerte 814 des Automatisierungsnetzwerks, also Ausgänge des angeschlossenen Systems 812 werden vom Client als Eingangswert-Pakete 998 an den Host weitergegeben, der nach entsprechender Verarbeitung Ausgangswert-Pakete 999 an den Client sendet. Daraufhin ermittelt der Client die Ausgangswerte 813 und überträgt sie an die Eingänge des Systems 812. Nachdem der Client die Eingangswert-Pakete 998 an den Host versandt hat, wird auf dem Client ein Timer mit der Wartezeit 995 gestartet. Selbstverständlich ist es auch möglich, andere Ereignisse für das Starten des Timers zu verwenden.

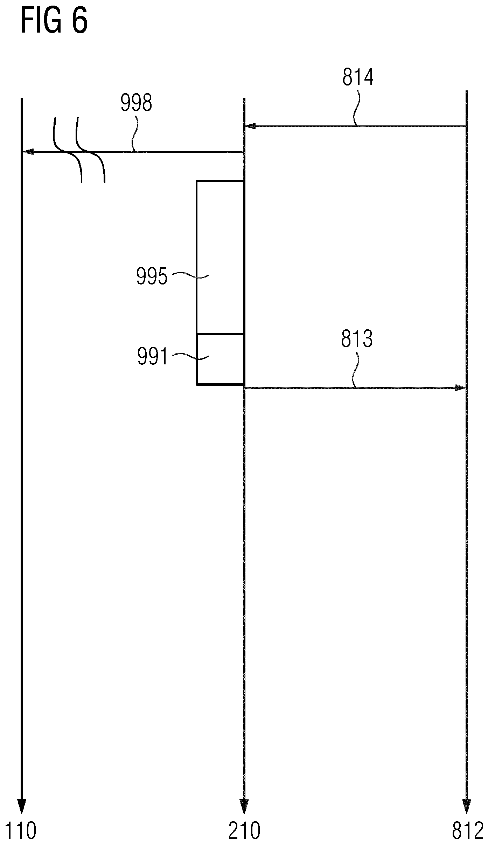

Fig. 6 zeigt entsprechend zur Fig. 5 den Zeitverlauf, wenn die Übertragung der Ausgangswert-Pakete 999 unterbrochen wird und/oder nur verzögert erfolgt. Dies kann z.B. durch Burst-Fehler auf der Funkübertragungsstrecke eintreten. Hier ist eine Störung im unmittelbaren Versand der Eingangswert-Pakete durch Wellenlinien angedeutet. Nach Ablauf einer vorgegebenen Wartezeit 995 erzeugt der Client Ersatz- Ausgangswert-Pakete 991 und gibt die entsprechenden Ausgangswerte 813 an das System 812 aus. Nicht in Fig. 6 dargestellt sind die Prozesse, dass einerseits der Host Wiederholungsanfragen an den Client sendet, wenn ein erwartetes Eingangswert-Paket nicht vorliegt, und dass andererseits der Client Wiederholungsanfragen an den Host senden kann, wenn ein erwartetes Ausgangswert-Paket nicht vorliegt.

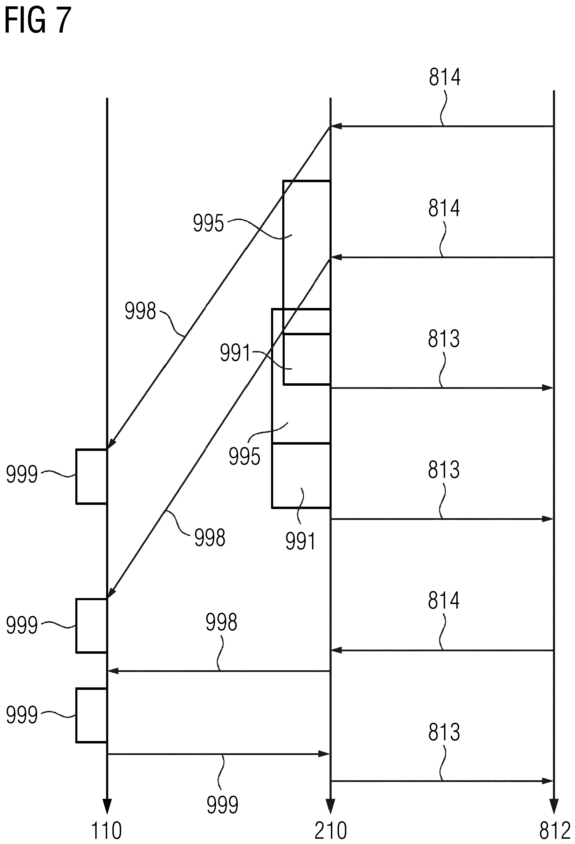

Fig. 7 zeigt den Verlauf, wenn Eingangswert-Pakete 998 verzögert an den Client übertragen werden. Wie in Fig. 6 übernimmt auch hier der Client nach der Wartezeit 995 die Erzeugung der Ersatz-Ausgangswert-Pakete 991, weil ihm nicht rechtzeitig vom Host entsprechende Pakete zur Verfügung stehen und gibt entsprechend Daten 813 an das System aus. Diese verzögerte Übermittlung zweier Eingangswert-Pakete an den Host wird durch die Neigung der die Übertragung der Eingangswert-Pakete 998 symbolisierenden Pfeile dargestellt. Wenn Eingangswert-Pakete verzögert beim Host eintreffen, so wertet der Host die Eingangswert-Pakete 998 beschleunigt aus. Wenn der Host nach Verarbeitung aller verzögert bearbeiteten Eingangswert-Pakete 998, die anhand des Zeitstempels unterschieden werden, infolge der beschleunigten Bearbeitung nun aktuelle Ausgangswert-Pakete 999 vorliegen hat, gibt er sie an den Client aus. Diese Ausgangswert-Pakete 999 werden vom Client dann wieder an das System als Ausgänge 813 weitergeleitet. Dies ist in Fig. 7 ganz unten für das dritte Eingangswert-Paket dargestellt.

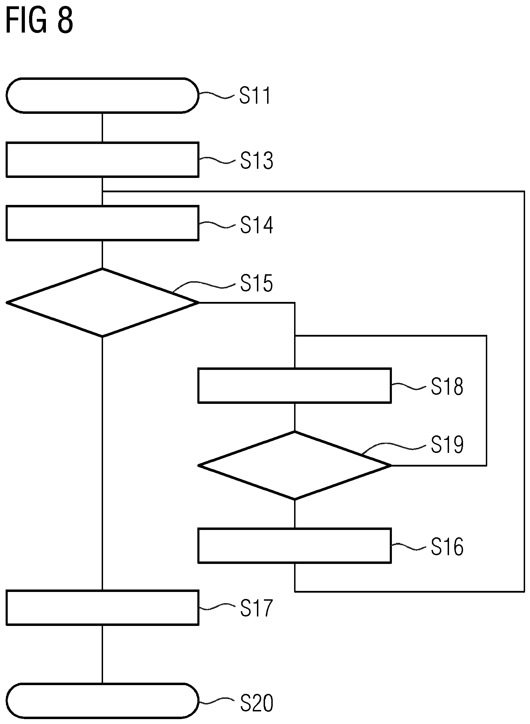

Fig. 8 enthält ein Flussdiagramm zur Beschreibung des Verfahrens der fünften Ausführungsform. Das Verfahren beginnt im Schritt 511. Zunächst wird der aktuelle tatsächliche Arbeitspunkt im Schritt S13 ermittelt. Im Schritt S14 wird für diesen Arbeitspunkt durch den Host ein neuer Satz Parameter für das lokale Verarbeitungsmodul erstellt. Im Schritt S15 wird überprüft, ob der Basis-Arbeitspunkt noch aktuell ist, sich also der tatsächliche Arbeitspunkt nicht so weit vom Basis-Arbeitspunkt entfernt hat, dass die Ersatzregelung über das zugeordnete Verarbeitungsmodul mit der neuen Parametrierung absehbar keine gültigen Ausgangswerte mehr liefern kann. Wenn dies der Fall ist, wenn der Basis-Arbeitspunkt also noch aktuell ist, werden die neuen Parameter im Schritt S17 an den Client übertragen, der sein lokales Verarbeitungsmodul 412 (s. Fig. 4) damit parametriert und ausführt. Wenn im Schritt S15 festgestellt wurde, dass sich der tatsächliche Arbeitspunkt zu weit vom Basis-Arbeitspunkt entfernt hat, wird im Schritt S18 auf Grundlage des tatsächlichen Arbeitspunktes ein neuer Basis-Arbeitspunkt samt zugehörigem lokalem Verarbeitungsmodul 512 (s. Fig. 3) erstellt und überprüft, ob das Verarbeitungsmodul für tatsächliche Arbeitspunkte in einem ausreichend großen Bereich um den Basis-Arbeitspunkt herum eine hinreichend hohe Regelungsgüte ermöglicht. Ist dies nicht der Fall, wird mit dieser Information zu Schritt S18 zurückgekehrt, um dort ein geeigneteres Verarbeitungsmodul zu generieren. Ist das Verarbeitungsmodul für die Regelung geeignet, wird es im Schritt S16 an den Client übertragen und danach zum Schritt 14 zurückgekehrt, um nun für auf Basis des neuen Verarbeitungsmoduls Parameter für den aktuellen tatsächlichen Arbeitspunkt zu erzeugen, die nach erfolgreicher Verifikation im Schritt S15 im Schritt S17 an den Client übertragen werden. Das Verfahren endet im Schritt S20.

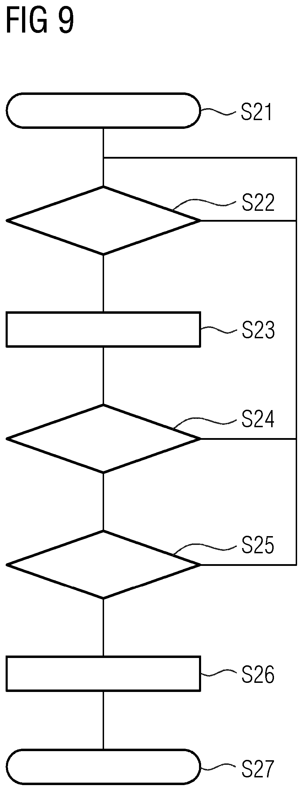

Fig. 9 ist eine Darstellung der Abläufe auf dem Host für die Kommunikation mit dem Client. Dieses Verfahren beginnt im Schritt S21. Im Schritt S22 wird überprüft, ob Eingangswert-Pakete 998 vom Client übertragen wurden. Ist dies nicht der Fall, kehrt das Verfahren zum Schritt S21 zurück. Andernfalls erzeugt der Host im Schritt S23 durch geeignete Verarbeitung, zu der auch Daten anderer Clients herangezogen werden können, Ausgangswert-Pakete 999. Wenn im Schritt S24 festgestellt wird, dass der Zeitstempel der Eingangswert-Pakete aktuell ist, wird im Schritt S25 geprüft, ob gerade kein Betrieb über das lokale Verarbeitungsmodul 412 auf dem Client stattfindet. Dann kann der Host das eben errechnete Ausgangswert-Paket 999 im Schritt S26 an den Client ausgeben. Wird im Schritt S25 Betrieb über das lokale Verarbeitungsmodul festgestellt, kehrt das System zum Schritt S22 zurück, um festzustellen, ob weitere noch nicht verarbeitete Eingangswert-Pakete vorliegen. Im Schritt S27 endet das Verfahren.

Hierbei ist zu berücksichtigen, dass der der Verlust von Eingangswert-Paketen kritisch ist und eigentlich gar nicht eintreten darf, insbesondere wenn der Host Aufgaben wie Logging oder Archivierung der Systemzustände hat. Deshalb sendet der Host im Falle fehlender erwarteter Eingangswert-Pakete Anfragen an den Client, in denen der Host den Client zur Wiederholung der Übertragung auffordert. Entsprechend muss der Client über einen Buffer verfügen, in dem die von ihm versandten Eingangswert-Pakete eine Zeit lang gespeichert bleiben, um sie im Falle einer Wiederholungsanfrage vom Host erneut zu versenden.

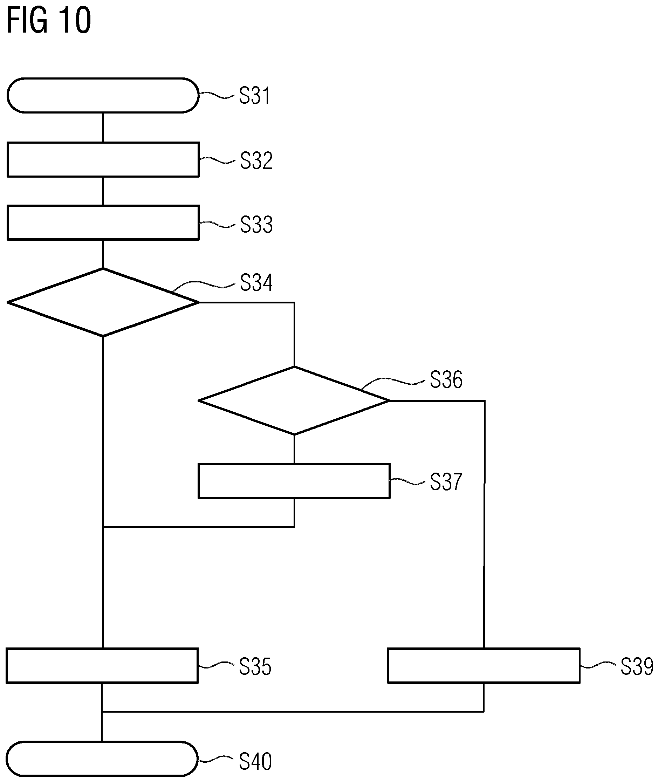

In Fig. 10 ist der Betrieb auf dem Client gezeigt. Das Verfahren beginnt im Schritt S31. Im Schritt S32 übermittelt der Client das aktuelle Eingangsdaten-Paket 998 an den Host. Nach einer durch den Schritt S33 symbolisierten Wartezeit 995 (s. Fig. 5-7) prüft das Verfahren im Schritt S34, ob entsprechende Ausgangswert-Pakete 999 vom Host vorliegen. Ist dies der Fall, wird dieses Paket im Schritt S35 als Ausgangsdaten 813 (s. Fig. 4) an das System übergeben. War die Prüfung im Schritt S34 negativ, wird im Schritt S36 überprüft, ob ein lokales Verarbeitungsmodul 412 einsatzbereit ist. Weiter wird in diesem Schritt S36 geprüft, ob das System sich innerhalb zeitlicher oder örtlicher Grenzen für den Betrieb des lokalen Verarbeitungsmoduls 412 bewegt. Wenn beide Bedingungen erfüllt sind, erzeugt das lokale Verarbeitungsmodul 412 im Schritt S37 ein Ausgangswert-Paket 999, das dann im Schritt S35 zum System ausgegeben werden kann. Wenn kein lokales Verarbeitungsmodul bereit ist oder wenn das System die vorgegebenen zeitlichen oder örtlichen Grenzen verlassen hat, führt der Client im Schritt S39 ein Notprogramm aus. Ein solches Notprogramm kann zum Beispiel ein Anhalten eines Flurförderzeugs bewirken oder eine sofortige Landung einer Drohne. Im Schritt S40 endet das Verfahren.

Durch die vorstehende Offenbarung wird es möglich, komplexe Regelungsaufgaben auf einem Host wahrzunehmen, wenn der Host mit dem die Stellgrößen ausgebenden Client über eine paketbasierte digitale Funkverbindung kommuniziert. Somit können auch in mobilen oder anderweitig schlecht zu verkabelnden Systemen komplexe Regelungsaufgaben an einem nicht lokalen Automatisierungssystem vorgenommen werden. Nicht lokal bedeutet hier, dass es sich um ein für den direkt mit dem zu steuernden oder zu regelnden System verbundenen Client externes Automatisierungssystem handelt. Somit können z.B. kompakte Drohnen, deren Clients in Bezug auf Systemressourcen begrenzt sind und über vergleichsweise geringe Rechenleistung verfügen, mit komplexen Verfahren, die einen hohen Ressourcenbedarf haben, gesteuert und geregelt werden.

Ein weiterer Vorteil der vorliegenden Offenbarung besteht in der Anpassbarkeit des in der Client-Einrichtung ausgeführten, im Vergleich zum Host mit geringer Komplexität ausgestatteten Steuerungs- bzw. Regelungssystems an die aktuell vorliegende Situation, also den tatsächlich vorliegenden Arbeitspunkt.

Bei reiner digitaler Funkübertragung können alternativ oder ergänzend zu den genannten Verfahren mehrere redundante, möglichst voneinander unabhängige Funkkanäle z.B. in weit auseinander liegenden Frequenzbändern, mit unterschiedlichen Modulationsverfahren und/oder mit unterschiedlichen räumlichen Übertragungsmoden genutzt werden.

Alternativ zu den oben beschriebenen digitalen Funkverfahren können auch Methoden optischer Kommunikation genutzt werden. Hier kann eine verringerte Störempfindlichkeit erreicht werden.

### Bezugszeichenliste

- 1: Automatisierungsnetzwerk
- 110: Host-Einrichtung
- 112: Antenne an Host-Einrichtung
- 210: Client-Einrichtung 1
- 212: Antenne an Client-Einrichtung 1
- 220: Client-Einrichtung 2
- 230: Client-Einrichtung 3
- 240: Client-Einrichtung 4
- 290: Client-Einrichtung n
- 310: Steuerungs- und/oder Regelungsmodul auf 110
- 319: Kommunikationsmodul für Client 210
- 401: Modul auf Client 210
- 412: Modul auf Client 210
- 418: Kommunikationsmodul auf Client 210 (zum System)
- 419: Kommunikationsmodul auf Client 210 (zum Host)
- 512: Modul für Client 210
- 812: System (mit Regelstrecke / Schaltstrecke)
- 813: Eingang des Systems (Aktor/Stellglied (z.B. Relaisspule))
- 814: Ausgang des Systems (Sensor/Messglied/Signalgeber (z.B. Endschalter))
- 818: Kommunikationsverbindung für Ausgabedaten des Automatisierungsnetzwerks an System (z.B. Stellgröβe/Stellersignal)
- 819: Kommunikationsverbindung für Eingabedaten des Automatisierungsnetzwerks von System (z.B. Messgröβe/Gebersignal)
- 910: Kommunikationsverbindung Host-Client
- 911: Kommunikationsverbindung downlink zu Client 210 (Teil von 910)
- 912: Kommunikationsverbindung uplink von Client 210 (Teil von 910)
- 913: alternative Kommunikationsverbindung downlink zu Client 210 (Teil von 915)
- 914: alternative Kommunikationsverbindung downlink zu Client 210 (Teil von 915)
- 915: alternative Kommunikationsverbindung Host-Client
- 920: Kommunikationsverbindung Host-Client
- 930: Kommunikationsverbindung Host-Client
- 940: Kommunikationsverbindung Host-Client
- 990: Kommunikationsverbindung Host-Client
- 991: Ersatz-Ausgangswert-Paket
- 998: in uplink Richtung übertragenes Datenpaket
- 999: in downlink Richtung übertragenes Datenpaket

## Patentansprüche

1. Verfahren zum Betrieb eines Automatisierungsnetzwerks (1), welches
mindestens eine Client-Einrichtung (210, 220, 230, 240, 290), die ein System (812) steuert, und Eingangsdaten von dem System (812) zur Verfügung gestellt bekommt, das durch die Client-Einrichtung gesteuert wird,
eine Host-Einrichtung (110) zur Durchführung komplexer Steueraufgaben in dem Automatisierungsnetzwerk, und
eine paketbasierte Kommunikationsverbindung (910) zwischen der Host-Einrichtung (110) und der Client-Einrichtung (210) aufweist,
mit den Schritten
Erzeugen und Versenden von den Eingangsdaten in Eingangswert-Paketen (998) durch die Client-Einrichtung (210) über die Kommunikationsverbindung (910) an die Host-Einrichtung (110),
Erzeugen und Versenden von Ausgangswert-Paketen (999) unter Einbeziehung der Eingangsdaten des mindestens einen Client-Systems durch die Host-Einrichtung (110) über die Kommunikationsverbindung (910) an die Client-Einrichtung (210), und,
falls die Client-Einrichtung (210) über die Kommunikationsverbindung (910) mindestens ein Ausgangswert-Paket (999) nicht innerhalb eines vorgegebenen Zeitraums empfängt, Erzeugen eines Ersatz-Ausgangswert-Pakets (991) durch die Client-Einrichtung (210).

2. Verfahren nach Anspruch 1,
**dadurch gekennzeichnet, dass**
die Erzeugung der Ersatz-Ausgangswert-Pakete (991) durch die Client-Einrichtung (210) in Abhängigkeit von mindestens einem durch die Host-Einrichtung (110) vorbestimmten Basis-Arbeitspunkt erfolgt.

3. Verfahren nach Anspruch 1 oder 2,
**dadurch gekennzeichnet, dass**
das Erzeugen der Ersatz-Ausgangswert-Pakete (991) durch die Client-Einrichtung (210) mit Hilfe eines der Client-Einrichtung (210) zugeordneten lokalen Verarbeitungsmoduls (412) erfolgt.

4. Verfahren nach Anspruch 3,
**gekennzeichnet durch**
Übermitteln von Parametern für das lokale Verarbeitungsmodul (412) durch die Host-Einrichtung (110) an die Client-Einrichtung (210).

5. Verfahren nach Anspruch 3 oder 4,
**gekennzeichnet durch**
Übermitteln des lokalen Verarbeitungsmoduls (512) durch die Host-Einrichtung (110) an die Client-Einrichtung (210).

6. Verfahren nach Anspruch 2,
**gekennzeichnet durch**
Ermitteln des mindestens einen vorbestimmten Basis-Arbeitspunkts durch die Host-Einrichtung (110) zu vorbestimmten Zeitpunkten.

7. Verfahren nach einem der Ansprüche 1 - 6, **gekennzeichnet durch**
beschleunigtes Erzeugen der Ausgangswert-Pakete (999) durch die Host-Einrichtung (110) so lange, bis die Host-Einrichtung (110) ein aktuelles Eingangswert-Paket (998) rechtzeitig verarbeitet hat, in dem Fall, dass auf der Kommunikationsverbindung (910) in Richtung von der Client-Einrichtung (210) zur Host-Einrichtung (110) mindestens ein Eingangswert-Paket (998) nicht innerhalb eines vorgegebenen Zeitraums empfangen wird; und
fortgesetztes Erzeugen der Ersatz-Ausgangswert-Pakete (991) durch die Client-Einrichtung (210) so lange, bis ein aktuelles Eingangswert-Paket (998) auf der Host-Einrichtung (110) empfangen wurde und die Host-Einrichtung (110) ab diesem Zeitpunkt die Ausgangswert-Pakete (999) erzeugt.

8. Verfahren nach einem der Ansprüche 1 - 7,
**gekennzeichnet durch**
Erzeugen einer Stellgröße (813) für eine Regelstrecke (812), die von der Client-Einrichtung (210) eine Stellgröße (813) empfängt, aus den Ausgangswert-Paketen (999) durch die Client-Einrichtung (210) und
Erstellen von Eingangswert-Paketen (998) aus einer von einem Messglied (819) empfangenen Messgröße (814) durch die Client-Einrichtung (210).

9. Verfahren nach Anspruch 8,
**gekennzeichnet durch**
Erzeugen der Ausgangswert-Pakete (999) zur Ermittlung der Stellgröße (813) durch die Host-Einrichtung (110) unter Verarbeitung der von der Client-Einrichtung aus der Messgröße (814) erstellten Eingangswert-Pakete (998).

10. Verfahren nach Anspruch 5,
**gekennzeichnet durch**
Übermitteln des lokalen Verarbeitungsmoduls (512) durch die Host-Einrichtung (110) an die Client-Einrichtung (210) über eine alternative Kommunikationsverbindung (915).

11. Verfahren nach Anspruch 5,
**gekennzeichnet durch**
Erstellen des lokalen Verarbeitungsmoduls (512) durch die Host-Einrichtung (110) in Abhängigkeit von einem durch die Host-Einrichtung (110) vorbestimmten Basis-Arbeitspunkt.

12. Verfahren nach einem der Ansprüche 1 - 11, **gekennzeichnet durch**
Erzeugen der Ersatz-Ausgangswert-Pakete (991) durch die Client-Einrichtung (210) bis zu einer zeitlichen oder örtlichen Begrenzung in dem Fall, dass auf der Kommunikationsverbindung (910) mindestens ein Paket (998, 999) nicht innerhalb eines vorgegebenen Zeitraums empfangen wird.

13. Client-Einrichtung (210), die dazu eingerichtet ist, ein System (812) zu steuern, und
die Eingangsdaten von dem System (812) zur Verfügung gestellt bekommt,
die zum Erzeugen und Versenden von den Eingangsdaten in Eingangswert-Paketen (998) über die Kommunikationsverbindung (910) an eine Host-Einrichtung (110), wobei die Host-Einrichtung (110) zur Durchführung komplexer Steueraufgaben in dem Automatisierungsnetzwerk eingerichtet ist,
und zum Empfangen von von der Host-Einrichtung (110), unter Einbeziehung der Eingangsdaten erzeugten und versendeten Ausgangswert-Paketen (999) über die Kommunikationsverbindung (910) eingerichtet ist, und,
die dazu eingerichtet ist, ein Ersatz-Ausgangswert-Paket (991) zu erzeugen, falls die Client-Einrichtung (210) über die Kommunikationsverbindung (910) mindestens ein Ausgangswert-Paket (999) nicht innerhalb eines vorgegebenen Zeitraums empfängt.

14. Automatisierungsnetzwerk (1) mit
mindestens einer Client-Einrichtung (210, 220, 230, 240, 290gemäß Patentanspruch 13, und
einer Host-Einrichtung (110) zur Durchführung komplexer Steueraufgaben in dem Automatisierungsnetzwerk, und
einer paketbasierten Kommunikationsverbindung (910) zwischen der Host-Einrichtung (110) und der Client-Einrichtung (210),
wobei
die Client-Einrichtung (210) zum Erzeugen und Versenden von den Eingangsdaten in Eingangswert-Paketen (998) über die Kommunikationsverbindung (910) an die Host-Einrichtung (110) eingerichtet ist,
die Host-Einrichtung (110) unter Einbeziehung der Eingangsdaten des mindestens einen Client-Systems zum Erzeugen und Versenden von Ausgangswert-Paketen (999) über die Kommunikationsverbindung (910) an die Client-Einrichtung (210) eingerichtet ist, und,
die Client-Einrichtung (210) weiter eingerichtet ist zum Erzeugen eines Ersatz-Ausgangswert-Pakets (991) falls die Client-Einrichtung (210) über die Kommunikationsverbindung (910) mindestens ein Ausgangswert-Paket (999) nicht innerhalb eines vorgegebenen Zeitraums empfängt.

15. Automatisierungsnetzwerk gemäß Patentanspruch 14, **dadurch gekennzeichnet, dass** es geeignet ist zur Durchführung eines Verfahrens mit den Merkmalen gemäß einem der Patentansprüche 2 bis 12.

## Claims

1. Method for operating an automation network (1) which has
at least one client device (210, 220, 230, 240, 290) which controls a system (812) and is provided with input data by the system (812) which is controlled by the client device,
a host device (110) for carrying out complex control tasks in the automation network, and
a packet-based communication connection (910) between the host device (110) and the client device (210),
having the steps of
the client device (210) generating and transmitting input data in input value packets (998) to the host device (110) via the communication connection (910),
the host device (110) generating and transmitting output value packets (999), with the inclusion of the input data from the at least one client system, to the client device (210) via the communication connection (910), and
the client device (210) generating a replacement output value packet (991) if the client device (210) does not receive at least one output value packet (999) within a predefined period via the communication connection (910).

2. Method according to Claim 1,
**characterized in that**
the replacement output value packets (991) are generated by the client device (210) on the basis of at least one base operating point predetermined by the host device (110).

3. Method according to Claim 1 or 2,
**characterized in that**
the replacement output value packets (991) are generated by the client device (210) with the aid of a local processing module (412) assigned to the client device (210).

4. Method according to Claim 3,
**characterized by**
the host device (110) transmitting parameters for the local processing module (412) to the client device (210).

5. Method according to Claim 3 or 4,
**characterized by**
the host device (110) transmitting the local processing module (512) to the client device (210).

6. Method according to Claim 2,
**characterized by**
the host device (110) determining the at least one predetermined base operating point at predetermined times.

7. Method according to one of Claims 1-6,
**characterized by**
the host device (110) generating the output value packets (999) in an accelerated manner until the host device (110) has processed a current input value packet (998) in a timely manner in the event that at least one input value packet (998) is not received within a predefined period on the communication connection (910) in the direction from the client device (210) to the host device (110); and
the client device (210) generating the replacement output value packets (991) in a continued manner until a current input value packet (998) has been received on the host device (110) and the host device (110) generates the output value packets (999) from this time on.

8. Method according to one of Claims 1-7,
**characterized by**
the client device (210) using the output value packets (999) to generate a manipulated variable (813) for a closed-loop controlled system (812) which receives a manipulated variable (813) from the client device (210), and
the client device (210) creating input value packets (998) from a measurement variable (814) received from a measurement element (819).

9. Method according to Claim 8,
**characterized by**
the host device (110) generating the output value packets (999) for determining the manipulated variable (813) by processing the input value packets (998) created by the client device from the measurement variable (814).

10. Method according to Claim 5,
**characterized by**
the host device (110) transmitting the local processing module (512) to the client device (210) via an alternative communication connection (915).

11. Method according to Claim 5,
**characterized by**
the host device (110) creating the local processing module (512) on the basis of a base operating point predetermined by the host device (110).

12. Method according to one of Claims 1-11,
**characterized by**
the client device (210) generating the replacement output value packets (991) until a temporal or local limitation in the event that at least one packet (998, 999) is not received within a predefined period on the communication connection (910) .

13. Client device (210) which is configured to control a system (812) and
is provided with input data by the system (812),
which is configured to generate and transmit input data in input value packets (998) to a host device (110) via the communication connection (910), wherein the host device (110) is configured to carry out complex control tasks in the automation network,
and is configured to receive output value packets (999), which are generated and transmitted by the host device (110) with the inclusion of the input data, via the communication connection (910), and
is configured to generate a replacement output value packet (991) if the client device (210) does not receive at least one output value packet (999) within a predefined period via the communication connection (910).

14. Automation network (1) having
at least one client device (210, 220, 230, 240, 290) according to Patent Claim 13, and
a host device (110) for carrying out complex control tasks in the automation network, and
a packet-based communication connection (910) between the host device (110) and the client device (210),
wherein
the client device (210) is configured to generate and transmit input data in input value packets (998) to the host device (110) via the communication connection (910),
the host device (110) is configured to generate and transmit output value packets (999), with the inclusion of the input data from the at least one client system, to the client device (210) via the communication connection (910), and
the client device (210) is also configured to generate a replacement output value packet (991) if the client device (210) does not receive at least one output value packet (999) within a predefined period via the communication connection (910) .

15. Automation network according to Patent Claim 14, **characterized in that** it is suitable for carrying out a method having the features according to one of Patent Claims 2 to 12.

## Revendications

1. Procédé d'exploitation d'un réseau d'automatisation (1) qui
présente au moins un dispositif client (210, 220, 230, 240, 290) qui commande un système (812) et reçoit des données d'entrée mises à disposition par le système (812) qui est commandé par le dispositif client,
un dispositif hôte (110) pour l'exécution de tâches de commande complexes dans le réseau d'automatisation, et
une liaison de communication par paquets (910) entre le dispositif hôte (110) et le dispositif client (210),
avec les étapes
de génération et d'envoi des données d'entrée dans des paquets de valeurs d'entrée (998) par le dispositif client (210) au dispositif hôte (110) via la liaison de communication (910),
de génération et d'envoi des paquets de valeurs de sortie (999) incluant les données d'entrée du au moins un système client par le dispositif hôte (110) au dispositif client (210) via la liaison de communication (910), et,
si le dispositif client (210) ne reçoit pas au moins un paquet de valeur de sortie (999) via la liaison de communication (910) dans un laps de temps prédéterminé, de génération par le dispositif client (210) d'un paquet de valeur de sortie de remplacement (991).

2. Procédé selon la revendication 1,
**caractérisé en ce que** la génération des paquets de valeurs de sortie de remplacement (991) par le dispositif client (210) est effectuée en fonction d'au moins un point de fonctionnement de base prédéterminé par le dispositif hôte (110).

3. Procédé selon la revendication 1 ou 2,
**caractérisé en ce que** la génération des paquets de valeurs de sortie de remplacement (991) par le dispositif client (210) est effectuée à l'aide d'un module de traitement local (412) associé au dispositif client (210).

4. Procédé selon la revendication 3,
**caractérisé par** la communication de paramètres pour le module de traitement local (412) par le dispositif hôte (110) au dispositif client (210).

5. Procédé selon la revendication 3 ou 4,
**caractérisé par** la transmission du module de traitement local (512) par le dispositif hôte (110) au dispositif client (210).

6. Procédé selon la revendication 2,
**caractérisé par** la détermination de l'au moins un point de fonctionnement de base prédéterminé par ledit dispositif hôte (110) à des instants prédéterminés.

7. Procédé selon l'une quelconque des revendications 1 à 6,
**caractérisé par** la génération accélérée des paquets de valeurs de sortie (999) par le dispositif hôte (110) jusqu'à ce que le dispositif hôte (110) ait traité à temps un paquet de valeurs d'entrée actuel (998), dans le cas où, sur la liaison de communication (910) dans le sens du dispositif client (210) vers le dispositif hôte (110), au moins un paquet de valeurs d'entrée (998) n'est pas reçu dans une période de temps prédéterminée ; et
la génération continue des paquets de valeurs de sortie de remplacement (991) par le dispositif client (210) jusqu'à ce qu'un paquet de valeurs d'entrée actuel (998) ait été reçu sur le dispositif hôte (110) et que le dispositif hôte (110) génère les paquets de valeurs de sortie (999) à partir de ce moment.

8. Procédé selon l'une quelconque des revendications 1 à 7,
**caractérisé par** la génération par le dispositif client (210) à partir des paquets de valeurs de sortie (999) d'une grandeur de réglage (813) pour un système asservi (812), qui reçoit une grandeur de réglage (813) du dispositif client (210),
la création par le dispositif client (210) de paquets de valeurs d'entrée (998) à partir d'une grandeur de mesure (814) reçue d'un élément de mesure (819).

9. Procédé selon la revendication 8,
**caractérisé par** la génération des paquets de valeurs de sortie (999) pour la détermination de la grandeur de réglage (813) par le dispositif hôte (110) en traitant les paquets de valeurs d'entrée (998) créés par le dispositif client à partir de la grandeur de mesure (814).

10. Procédé selon la revendication 5,
**caractérisé par** la communication du module de traitement local (512) par le dispositif hôte (110) au dispositif client (210) via une liaison de communication alternative (915).

11. Procédé selon la revendication 5,
**caractérisé par** la création du module de traitement local (512) par le dispositif hôte (110) en fonction d'un point de fonctionnement de base prédéterminé par le dispositif hôte (110).

12. Procédé selon l'une quelconque des revendications 1 à 11,
**caractérisé par** la génération des paquets de valeur de sortie de remplacement (991) par le dispositif client (210) jusqu'à une limite de temps ou de lieu dans le cas où, sur la liaison de communication (910), au moins un paquet (998, 999) n'est pas reçu dans une période de temps prédéterminée.

13. Dispositif client (210) configuré pour commander un système (812), et
recevoir les données d'entrée mises à disposition par le système (812),
pour générer et envoyer les données d'entrée dans des paquets de valeurs d'entrée (998) sur la liaison de communication (910) à un dispositif hôte (110), le dispositif hôte (110) étant configuré pour effectuer des tâches de commande complexes dans le réseau d'automatisation,
et pour recevoir des paquets de valeurs de sortie (999) générés et envoyés par le dispositif hôte (110), incluant les données d'entrée, via la liaison de communication (910), et,
configuré pour générer un paquet de valeur de sortie de remplacement (991) si le dispositif client (210) ne reçoit pas au moins un paquet de valeur de sortie (999) via la liaison de communication (910) dans une période de temps prédéterminée.

14. Réseau d'automatisation (1) comprenant au moins un dispositif client (210, 220, 230, 240, 290) selon la revendication 13, et
un dispositif hôte (110) pour l'exécution de tâches de commande complexes dans le réseau d'automatisation, et
une liaison de communication par paquets (910) entre le dispositif hôte (110) et le dispositif client (210),
dans lequel le dispositif client (210) est configuré pour générer et envoyer les données d'entrée dans des paquets de valeurs d'entrée (998) via la liaison de communication (910) au dispositif hôte (110),
le dispositif hôte (110) est configuré pour générer et envoyer des paquets de valeurs de sortie (999) au dispositif client (210) via la liaison de communication (910), en incluant les données d'entrée du au moins un système client, et,
le dispositif client (210) est en outre configuré pour générer un paquet de valeur de sortie de remplacement (991) si le dispositif client (210) ne reçoit pas au moins un paquet de valeur de sortie (999) via la liaison de communication (910) dans une période de temps prédéterminée.

15. Réseau d'automatisation selon la revendication 14, **caractérisé en ce qu'**il est adapté pour mettre en œuvre un procédé présentant les caractéristiques selon l'une des revendications 2 à 12.
